# EUROPÄISCHE PATENTSCHRIFT

(11) **EP 4 366 930 B1**
(45) Veröffentlichungstag und Bekanntmachung des Hinweises auf die Patenterteilung: **09.04.2025**
(21) Anmeldenummer: 22746971.5
(22) Anmeldetag: 04.07.2022
(51) Int. Cl.: B29C 49/04, B29C 49/42, B29C 48/00, B29C 48/08, B29C 48/14, B29C 48/92, B29K 105/00

(54) **EXTRUSIONSVORRICHTUNG UND VERFAHREN ZUR HERSTELLUNG EINES EINEN HOHLRAUM AUFWEISENDEN GEGENSTANDES**
EXTRUSION DEVICE AND METHOD FOR MANUFACTURING AN ARTICLE HAVING A CAVITY
DISPOSITIF D'EXTRUSION ET PROCÉDÉ DE FABRICATION D'UN OBJET PRÉSENTANT UNE CAVITÉ

(30) Priorität: 07.07.2021 DE 102021117604
(43) Veröffentlichungstag der Anmeldung: 15.05.2024
(73) Patentinhaber: Collin Lab & Pilot Solutions GmbH, 83558 Maitenbeth (DE)
(72) Erfinder: KASTNER, Friedrich, 4710 Grieskirchen (AT)
(74) Vertreter: Burger, Hannes Alfred
(86) Internationale Anmeldenummer: PCT/EP2022/068409
(87) Internationale Veröffentlichungsnummer: WO 2023/280759

(56) Entgegenhaltungen:
- US-A- 4 402 656
- US-A1- 2002 076 459

## Beschreibung

Die Erfindung betrifft eine Extrusionsvorrichtung, insbesondere Blasfolienextrusionsvorrichtung, gemäß dem Oberbegriff des Anspruch 1 und ein Verfahren zur Herstellung eines einen Hohlraum aufweisenden Gegenstandes gemäß dem Oberbegriff des Anspruch 14.

Es ist bekannt, dass bei der Extrusion, zum Beispiel bei der Herstellung von Blasfolien oder Schläuchen, Aufblassysteme verwendet werden, die mittels Überdrucks eine Blase oder einen Hohlraum im entstehenden Strang erzeugen. Dabei wird eine sogenannte Stützluft in das Innere des entstehenden Gegenstandes geblasen.

Die DE102017008803A1 offenbart eine Vorrichtung zum Herstellen und Befüllen von Behältererzeugnissen, bei der ein Schlauch plastifizierten Kunststoffmaterials von einem Extrusionskopf entlang einer Schlauchführung in eine Form hinein extrudiert wird. Mittels einer Prozessgaszuführungseinrichtung wird Prozessgas in das Inneres des Schlauches eingebracht.

Die US 2002/076459 A1 offenbart ein System zum Anfahren eines extrudierten Folienschlauches in einer Blasfolienextrusionsvorrichtung mit einem Teilsystem zum Ändern einer Luftmenge in der extrudierten Folie und einem Teilsystem zum Ausführen von Programmanweisungen, die den Betrieb des Teilsystems zum Ändern einer Luftmenge steuern.

Die US 4 402 656 A offenbart ein innengekühltes Blasfoliensystem zur Herstellung von Kunststoffschläuchen, bei dem die Durchflussmenge des kontinuierlichen Stroms von Innenkühlluft durch berührungslose Energiestrahlsensormittel direkt von der Lageabweichung der Schlauchwandung abhängig gemacht wird.

Extrusionsblasanlagen und Blasfolienanlagen - speziell mit geringem Blasvolumen - gemäß Stand der Technik haben den Nachteil, dass die - zum Teil manuelle - Ansteuerung der Ventile zu ungenauen, variierenden und nur ungenau reproduzierbaren Eigenschaften (insbesondere Dimensionen wie Durchmesser, Dicke, usw.) der entstehenden Produkte führen. Dies führt besonders bei hoch präzisen Bauteilen oft zu Fehlern bzw. zu unerwünschten Effekten wie das Aufschwingen der Blase oder aber auch das Ausbrechen der Blase in noch nicht erstarrten Bereichen des Stranges.

Aufgabe der vorliegenden Erfindung war es, die Nachteile des Standes der Technik zu überwinden und eine Vorrichtung und ein Verfahren zur Verfügung zu stellen, mit dem durch eine gezielte Beeinflussung des Stützgasstromes die Qualität und Präzision der entstehenden Produkte nachhaltig verbessert werden soll. Dabei sollen Eigenschaften, insbesondere Dimensionen, wie (Außen-)Durchmesser oder Wanddicke, entlang des extrudierten Stranges konstant und reproduzierbar werden. Die Lösung soll zuverlässig und kostengünstig sein und eine vereinfachte Anwendung ermöglichen.

Diese Aufgabe wird durch eine Extrusionsvorrichtung und ein Verfahren zur Herstellung eines einen Hohlraum aufweisenden Gegenstandes gemäß den Ansprüchen gelöst.

Gemäß der Erfindung umfasst die Extrusionsvorrichtung zur Herstellung eines einen Hohlraum aufweisenden Gegenstandes, insbesondere eines Schlauches oder eines Behälters,
- eine Materialzufuhr, die in einer Extrusionsdüse mündet, und
- eine in einer Einblasöffnung mündende Stützgaszufuhr zum Einbringen von
Stützgas, vorzugsweise Luft, in das Innere des entstehenden Gegenstandes, wobei die Stützgaszufuhr zumindest ein Ventil zur Regelung des Stützgases aufweist.

Zumindest ein Ventil zur Regelung der Stützgases ist ein durch einen Regler regelbares Proportionalventil.

Einerseits wird durch die Verwendung eines (insbesondere elektrisch ansteuerbaren) Proportionalventils erreicht, dass der Stützgasstrom stetig einstellbar ist und daher eine präzise Regelung des Stützgasstromes erfolgt, wodurch in Folge der Druck im Inneren des entstehenden Gegenstandes bzw. Extrudats den konkreten Anforderungen des Verfahrensablaufes entsprechen kann (z.B. konstant gehalten werden kann). Andererseits wird durch den Regler ermöglicht, dass das Proportionalventil geregelt und nicht bloß gesteuert wird. Somit kann auch auf aktuelle Bedingungen (Stützgasstrom) und/oder Eigenschaften (Extrudat) automatisch reagiert werden. Abweichungen von einem gewünschten Verhalten können durch (Nach-)Regelung des Proportionalventils sofort behoben bzw. kompensiert werden.

Als Regler für das Proportionalventil kann jeder geeignete Regler, insbesondere ein PI-Regler, ein PID-Regler und/oder ein nichtlinearer Regler verwendet werden.

Bei dem zugeführten Material kann es sich um jegliches Material handeln, welches durch den Vorgang der Extrusion in eine bestimmte Form gebracht werden kann, insbesondere Kunststoffmaterial, welches aufgrund seiner (thermoplastischer) Eigenschaften plastifizierbar oder verflüssigbar ist und in diesem Zustand durch eine Extrusionsdüse gefördert werden kann.

Die Extrusionsdüse und die Einblasöffnung können in einem gemeinsamen Extrusionskopf angeordnet sein. Materialstrom und Stützgasstrom haben hier nach Austritt aus dem Extrusionskopf im Wesentlichen dieselbe Richtung. Der Querschnitt der Austrittsöffnung der Extrusionsdüse ist insbesondere umlaufend, vorzugsweise ringförmig, und umschließt den Bereich, in dem sich die Einblasöffnung befindet.

Die Extrusionsvorrichtung ist vorzugsweise eine Vorrichtung, bei der das Extrudat ein Endlosprodukt darstellt, insbesondere einen (Folien-)Schlauch oder schlauch- bzw. rohrförmige Gebilde, wobei das Endlosprodukt meist keine eigene Formstabilität aufweist. Stromabwärts der Extrusionsdüse werden hier keine weiteren Formen verwendet, d.h. das Extrudat wird nach Austritt aus der Extrusionsdüse ausschließlich über das eingebrachte Stützgas in Form gebracht bzw. in dieser gehalten. Die Extrusionsvorrichtung ist somit bevorzugt eine Blasfolien- oder Blasschlauchextrusionsvorrichtung, wobei beide Begriffe auch synonym verwendet werden.

Es ist jedoch nicht ausgeschlossen, dass die Extrusionsvorrichtung stromabwärts der Extrusionsdüse eine Form aufweisen kann, in die das Material hinein extrudierbar ist. Das Stützgas kann in diesem Fall das Extrudat gegen die Innenwand der Form drücken.

Die Erfindung eignet sich wie bereits oben erwähnt insbesondere für die Herstellung von Endlosprodukten (z.B. Schläuchen). Auch hinsichtlich der Dimensionen gibt es keine Beschränkungen. So können dünne Schläuche (z.B. Folienschläuche bzw. Blasfolien) ebenso hergestellt werden wie Schläuche oder schlauchförmige Gegenstände mit größerer Wanddicke.

Die Extrusionsvorrichtung kann ein (vorzugweise beheiztes) Materialreservoir aufweisen, von dem sich die Materialzufuhr bis zur Extrusionsdüse erstreckt.

Eine bevorzugte Ausführungsform zeichnet sich dadurch aus, dass die Extrusionsvorrichtung zum Stellen des Proportionalventils einen - einen Regler umfassenden - Regelkreis aufweist, bei dem ein erfasster IST-Wert einer Eigenschaft des Gegenstandes, insbesondere ein Durchmesser des Gegenstandes, und/oder ein IST-Wert des Stützgasstromes auf die Stellgröße des Proportionalventils zurückwirkt. Durch die Rückwirkung von erfassten IST-Werten auf den Regelkreis, kann das Proportionalventil unmittelbar, insbesondere in Echtzeit, nachgeregelt werden. Durch diese Maßnahme kann das Proportionalventil zuverlässig geregelt werden, wodurch Effekte wie das Aufschwingen der Stützgas(-blase) oder aber auch das Ausbrechen des Stützgases in noch nicht erstarrten Bereichen des Extrudats.

Eine bevorzugte Ausführungsform zeichnet sich dadurch aus, dass die Führungsgröße des Regelkreises ein SOLL-Durchmesser des Gegenstandes und/oder ein durch einen Rampengenerator angepasster SOLL-Durchmesser des Gegenstandes ist. Der Durchmesser des entstehenden Gegenstandes hängt stark von der Stützgaszufuhr ab. Das Extrudat wird aufgebläht oder fällt in sich zusammen, wenn der Stützgasstrom nicht korrekt eingestellt ist. Mit der Erfassung des Durchmessers wird somit ein direkter Zusammenhang zum Stützgas hergestellt.

Die Extrusionsvorrichtung zeichnet sich dadurch aus, dass das Proportionalventil in zumindest einem Arbeitsbereich eine nichtlineare Gasstromkennlinie aufweist. Die Erfindung ermöglicht, dass z.B. anstelle eines oder mehrerer einfacher Magnetventile ein elektrisch angesteuertes Proportionalventil eingesetzt wird. Diese Ventile zeigen aber oft kein lineares Ansprechverhalten. Also z.B. bei analoger Ansteuerung (z.B. 0-10V) keine linearen Volumen- oder Massenströme. Durch die Regelung mittels Regler können solche Nicht-Linearitäten jedoch kompensiert werden

Die Extrusionsvorrichtung zeichnet sich dadurch aus, dass der Regelkreis eine - dem Regler überlagerte - Vorsteuerung aufweist, wobei vorzugsweise die Vorsteuerung ausgelegt ist, eine nichtlineare Gasstromkennlinie des Proportionalventils zu kompensieren. Durch die Vorsteuerung wird nicht nur das Führungsverhalten verbessert, sondern kann insbesondere auf Nicht-Linearitäten, die Proportionalventilen oftmals innewohnen, eingegangen werden. In diesem Fall handelt es sich um eine sogenannte linearisierte Vorsteuerung. Für zumindest einen Stellbereich, vorzugsweise für den gesamten Arbeitsbereich, des Proportionalventils kann daher in der Vorsteuerung die nichtlineare Gasstromkennlinie des Proportionalventils - direkt oder indirekt - abgebildet sein. Die Stabilität der Regelung und in Folge die Stabilität des Stützgasstromes bzw. Gasdruckes innerhalb des entstehenden Gegenstandes kann durch diese Maßnahme stark verbessert werden. Die nichtlineare Charakteristik des Proportionalventils kann durch eine solche linearisierte Vorsteuerung kompensiert werden.

Die Kennlinie des Ventilverhaltens kann dabei z.B. entweder durch ein oder mehrere Stützpunkte linearisiert werden oder auch über einen Identifikationslauf festgestellt werden.

Optional kann/können über den Regler das/die (zusätzlichen) Ventile auch manuell angesteuert werden. Zur Justage des Reglers kann ein eigener Modus verwendet werden, in dem der Volumenstrom auf einen definierten Wert gestellt wird.

Eine bevorzugte Ausführungsform zeichnet sich dadurch aus, dass dem Regler ein Rampengenerator zur Sollwertanpassung vorgeschaltet ist, wobei vorzugsweise der SOLL-Durchmesser und der IST-Durchmesser des Gegenstandes Eingangsgrößen des Rampengenerators sind. Um große Sollwertänderungen des Durchmessers realisieren zu können, kann die Durchmesseränderung optional durch einen Rampengenerator oder ähnliches gestuft oder zeitlich gedehnt werden.

Eine bevorzugte Ausführungsform zeichnet sich dadurch aus, dass in der Stützgaszufuhr zumindest ein Sensor zur Erfassung einer Eigenschaft des Stützgasstromes, vorzugsweise des Volumenstromes und/oder des Massenstromes und/oder des Gasdruckes des Stützgases, angeordnet ist, wobei vorzugsweise die erfasste(n) Eigenschaft(en) des Stützgasstromes als Eingangsgröße(en) für den Regelkreis und/oder die Vorsteuerung dient/-en. Da der Gasstrom für die Eigenschaften und die Qualität des entstehenden Gegenstandes ausschlaggebend sind, kann das Verfahren durch eine Regelschleife, welche solche Sensoren verwendet, erheblich verbessert werden. Durch die Sensordaten (z.B. Volumenstrom oder Massenstrom) kann die Charakteristik der Regelung des Proportionalventils linear oder einer bestimmten Charakteristik folgend eingestellt werden. Auch durch diese Maßnahme kann somit eine Kompensation eines nicht-linearen Verhaltens eines Proportionalventils erfolgen.

Eine bevorzugte Ausführungsform zeichnet sich dadurch aus, dass die Extrusionsvorrichtung zumindest ein Sensor zur Erfassung einer Eigenschaft des Gegenstandes, insbesondere des Durchmessers des Gegenstandes, aufweist, wobei vorzugsweise die erfasste(n) Eigenschaft(en) des Gegenstandes als Eingangsgröße(en) für den Regelkreis und/oder die Vorsteuerung dient/-en. Hier wird direkt anhand der Eigenschaften des Gegenstandes und somit anhand der unmittelbaren Folgen eines bestimmten Gasstromes eine Feedbackschleife mit hoher Stabilität hergestellt.

Eine bevorzugte Ausführungsform zeichnet sich dadurch aus, dass aus der Stützgaszufuhr eine Abführleitung zum Abführen von Stützgas abzweigt, wobei vorzugweise die Abführleitung an einen Unterdruckerzeuger, insbesondere eine Vakuumpumpe, angeschlossen ist. Dadurch kann bei Bedarf ein Zuviel an Stützgas abgeführt werden. Der Regelbereich wird dadurch erweitert und die zeitliche Latenz der Regelung bei Vorliegen eines zu hohen Druckes im Inneren des Extrudats verringert.

Eine bevorzugte Ausführungsform zeichnet sich dadurch aus, dass die Abführleitung über das Proportionalventil mit der Stützgaszufuhr verbunden ist, wobei die Abführleitung in einem ersten Stellbereich des Proportionalventils von der Stützgaszufuhr abgekoppelt ist und in einem zweiten Stellbereich des Proportionalventils an die Stützgaszufuhr angekoppelt ist. Durch diese bevorzugte Maßnahme übernimmt das Proportionalventil eine weitere Funktion, nämlich das Abführen von Stützluft. Der Arbeitsbereich wird dadurch ebenso erweitert, wie die Stabilität und Zuverlässigkeit des Herstellungsverfahrens.

In einer alternativen Ausführungsform mündet die Abführleitung in einem Bereich zwischen dem Proportionalventil und der Einblasöffnung in die Stützgaszufuhr. Zur Regelung des abgeführten Stützgases kann in der Abführleitung ein gesondertes Ventil vorgesehen werden.

Eine bevorzugte Ausführungsform zeichnet sich dadurch aus, dass der Regelkreis derart ausgelegt ist, dass in einem Bereich des Regelbereiches, vorzugsweise beginnend im Bereich der Mitte des Regelbereiches, durch Ankoppeln der Abfuhrleitung an die Stützgaszufuhr Stützgas abgeführt wird, wodurch vorzugsweise der Druck im Inneren des entstehenden Gegenstandes abgebaut und/oder auf einem Sollwert gehalten wird.

Eine bevorzugte Ausführungsform zeichnet sich dadurch aus, dass die Abführleitung an einen Unterdruckerzeuger, insbesondere eine Vakuumpumpe, angeschlossen ist, wobei vorzugsweise der Unterdruckerzeuger von dem Regler des Regelkreises angesteuert wird.

Eine bevorzugte Ausführungsform zeichnet sich dadurch aus, dass die Stützgaszufuhr eine Gasdruckquelle aufweist. Die Gasdruckquelle kann beispielsweise ein unter Druck stehendes Gasreservoir oder eine Einrichtung zum Erzeugen (bzw. Erhöhen) des Gasdruckes, insbesondere ein Gebläse oder ein Kompressor, sein.

Eine bevorzugte Ausführungsform zeichnet sich dadurch aus, dass in zumindest einer Stellung, vorzugsweise in einem Stellbereich, des Proportionalventils sowohl ein zwischen dem Proportionalventil und der Gasdruckquelle verlaufender Abschnitt der Stützgaszufuhr als auch die Abführleitung strömungstechnisch an die Einblasöffnung gekoppelt sind. Auf diese Weise kann der durch die Einblasöffnung gehende Stützgasstrom sehr fein geregelt werden.

Eine bevorzugte Ausführungsform zeichnet sich dadurch aus, dass in zumindest einem Betriebszustand der Extrusionsvorrichtung sowohl die Gasdruckquelle über das zumindest teilweise geöffnete Proportionalventil als auch der Unterdruckerzeuger - vorzugsweise über zumindest ein zumindest teilweise geöffnetes Ventil - strömungstechnisch an die Einblasöffnung gekoppelt sind, sodass gleichzeitig Stützgas über die Stützgaszufuhr zugeführt und über die Abführleitung abgeführt werden kann, wobei vorzugsweise das Verhältnis zwischen des zugeführten Stützgases und des abgeführten Stützgases mittels des Proportionalventils und/oder einem in der Abführleitung geschalteten Ventil und/oder einem regelbaren Unterdruckerzeuger regelbar ist. Durch diese Maßnahme lässt sich das durch die Einblasöffnung in das Extrudat strömende Stützgas besonders genau regeln. Mit dem gleichzeitigen Abführen von Gas kann nämlich nicht nur der Regelbereich erweitert werden, sondern auch eine besonders schnelle Anpassung der Strömungsparameter erfolgen, um Abweichungen von einem Idealzustand des Extrudats zu verhindern bzw. schnell wieder auszugleichen.

Eine bevorzugte Ausführungsform zeichnet sich dadurch aus, dass in der Abfuhrleitung zumindest ein - vorzugsweise händisch und/oder durch einen gesonderten Regler ansteuerbares - Ventil zur Steuerung der Stützgasabfuhr geschaltet ist. Durch diese Maßnahmen kann - insbesondere für spezielle Anwendungen - der in der Abfuhrleitung anliegende (Unter-)Druck ein- bzw. ausgeschaltet oder auf einen bestimmten Wert voreingestellt werden.

Eine bevorzugte Ausführungsform zeichnet sich dadurch aus, dass die Stützgaszufuhr zusätzlich zu dem Proportionalventil zumindest ein weiteres - vorzugsweise händisch und/oder durch einen gesonderten Regler ansteuerbares - Ventil zur Steuerung des Stützgases aufweist, wobei vorzugsweise das weitere Ventil zwischen dem Proportionalventil und der Gasdruckquelle geschaltet ist. Durch diese Maßnahmen kann - insbesondere für spezielle Anwendungen - der in der Stützgaszufuhr - stromaufwärts des Proportionalventils - anliegende (Über-)Druck ein- bzw. ausgeschaltet oder auf einen bestimmten Wert voreingestellt werden.

Eine bevorzugte Ausführungsform zeichnet sich dadurch aus, dass die Extrusionsdüse und die Einblasöffnung in einem Extrusionskopf integriert sind. Materialstrom und Gasstrom weisen im Wesentlichen in dieselbe Richtung.

Das Ziel wird auch erreicht mit einem Verfahren zur Herstellung eines einen Hohlraum aufweisenden Gegenstandes, insbesondere eines Schlauches oder eines Behälters, mittels einer Extrusionsvorrichtung, wobei über eine Materialzufuhr Material zu einer Extrusionsdüse zugeführt wird und mittels eine Stützgaszufuhr Stützgas über eine Einblasöffnung in das Innere des entstehenden Gegenstandes eingebracht wird, wobei die Stützgaszufuhr zumindest ein Ventil zur Regelung der Stützgases aufweist, dadurch gekennzeichnet, dass zumindest ein Ventil zur Regelung der Stützgaszufuhr ein durch einen Regler regelbares Proportionalventil ist Eine bevorzugte Ausführungsform zeichnet sich dadurch aus, dass das Stellen des Proportionalventils durch einen - einen Regler umfassenden - Regelkreis erfolgt, bei dem ein erfasster IST-Wert einer Eigenschaft des Gegenstandes, insbesondere ein Durchmesser des Gegenstandes, und/oder ein IST-Wert des Stützgasstromes auf die Stellgröße des Proportionalventils zurückwirkt.

Das Verfahren zeichnet sich dadurch aus, dass der Regelkreis eine - dem Regler überlagerte - Vorsteuerung aufweist, wobei vorzugsweise mittels der Vorsteuerung eine nichtlineare Gasstromkennlinie des Proportionalventils kompensiert wird.

Eine bevorzugte Ausführungsform zeichnet sich dadurch aus, dass eine Abführleitung zum Abführen von Stützgas über das Proportionalventil mit der Stützgaszufuhr verbunden ist, wobei zum Regeln des Stützgasstromes das Proportionalventil zwischen einem ersten Stellbereich, in dem die Abführleitung von der Stützgaszufuhr abgekoppelt ist, und einem zweiten Stellbereich, in dem die Abführleitung an die Stützgaszufuhr angekoppelt ist, geregelt wird,

Eine bevorzugte Ausführungsform zeichnet sich dadurch aus, dass in einem Bereich des Regelbereiches, vorzugsweise beginnend im Bereich der Mitte des Regelbereiches, durch Ankoppeln der Abfuhrleitung an die Stützgaszufuhr Stützgas abgeführt wird, wodurch vorzugsweise der Druck im Inneren des entstehenden Gegenstandes abgebaut und/oder auf einem Sollwert gehalten wird.

Bevorzugt ist somit, dass - z.B. ungefähr in der Mitte des Regelbereiches - ein Gegenstrom durch die Abführleitung (z.B. mittels Vakuumpumpe) aufgebaut wird, der den Druck gegenüber der Blase auf 0 bar oder einen anderen Sollwert egalisiert. Wird nun das Ventil weiter geöffnet, so wird aufgeblasen. Wird weiter geschlossen, so wird abgesaugt da dann der angelegte Unterdruck (Vakuum) überwiegt. Sämtliche Ventile können durch zusätzliche manuelle Ventile noch feinjustiert werden.

Eine bevorzugte Ausführungsform zeichnet sich dadurch aus, dass in zumindest einem Betriebszustand der Extrusionsvorrichtung sowohl die Gasdruckquelle über das zumindest teilweise geöffnete Proportionalventil als auch der Unterdruckerzeuger - vorzugsweise über zumindest ein zumindest teilweise geöffnetes Ventil - strömungstechnisch an die Einblasöffnung gekoppelt sind, sodass gleichzeitig Stützgas über die Stützgaszufuhr zugeführt und über die Abführleitung abgeführt wird, wobei vorzugsweise das Verhältnis zwischen des zugeführten Stützgases und des abgeführten Stützgases mittels des Proportionalventils und/oder einem in der Abführleitung geschalteten Ventil und/oder einem regelbaren Unterdruckerzeuger geregelt wird. Durch diese Maßnahme lässt sich die durch die Einblasöffnung in das Extrudat strömende Stützgas besonders genau regeln. Mit dem gleichzeitigen Abführen von Gas kann der Regelbereich erweitert werden.

Eine bevorzugte Ausführungsform zeichnet sich dadurch aus, dass die Extrusionsvorrichtung gemäß der Erfindung ausgebildet ist.

Der Regler steuert den - optional erwähnten - Unterdruckerzeuger (z.B. Vakuumpumpe) entweder permanent an oder es erfolgt eine Umschaltung in Abhängigkeit des gewünschten Arbeitspunktes. Dadurch kann ein sehr weiter Regelbereich realisiert werden. Diesem kann die Ansteuerung der Zufuhr des Stützgases überlagert werden. Dabei können einfache PID Regler als auch nichtlineare Regler verwendet werden. Wie bereits erwähnt kann zur dynamischen und genauen Regelung dem Regler eine Vorsteuerung, die auch vom gewünschten Arbeitspunkt abhängen kann, überlagert werden.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Extrusionsvorrichtung
- Fig. 2: eine schematische Darstellung des Regelkreises einer Ausführungsform der Extrusionsvorrichtung
- Fig. 3: eine Ausführungsform einer Extrusionsvorrichtung

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

### FIGURENBESCHREIBUNG

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

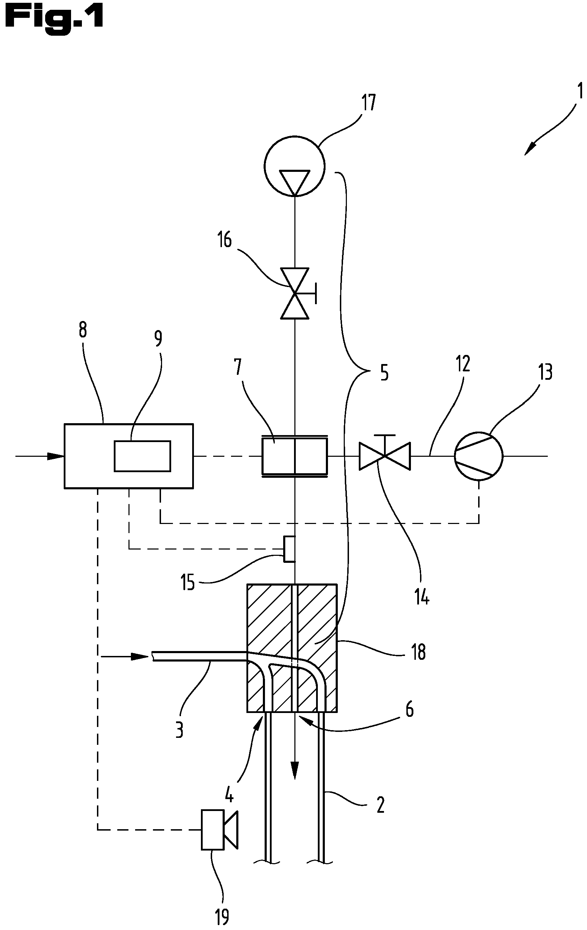

Fig. 1 zeigt eine Extrusionsvorrichtung 1 in Form einer Blasfolienextrusionsvorrichtung zur Herstellung eines einen Hohlraum aufweisenden Gegenstandes 2, insbesondere eines Schlauches, einer Blasfolie oder eines Behälters, vorzugsweise aus Kunststoff. Dabei wird ein Endlosprodukt erzeugt, an welches Anforderungen hinsichtlich Durchmesser, Wanddicke, usw. gestellt werden. Eine Materialzufuhr 3, die von einem nicht dargestellten Materialreservoir ausgeht, mündet in einer Extrusionsdüse 4 des Extrusionskopfes 18. Eine in einer Einblasöffnung 6 mündende Stützgaszufuhr 5 dient zum Einbringen von Stützgas in das Innere des entstehenden Gegenstandes 2 (Extrudat). Die Stützgaszufuhr 5 weist zumindest ein Ventil 7, 16 zur Regelung des Stützgases auf, wobei zumindest ein Ventil zur Regelung der Stützgases ein durch einen Regler 9 regelbares Proportionalventil 7 ist.

In Fig. 1 ist weiters zu sehen, dass die Stützgaszufuhr 5 eine Gasdruckquelle 17 - hier in Form eines Kompressors - aufweist. Die Gasdruckquelle 17 muss nicht unbedingt Bestandteil der Extrusionsvorrichtung, sondern könnte auch extern zur Verfügung stehen und nur an die Stützgaszufuhr angeschlossen werden.

Die Extrusionsdüse 4 und die Einblasöffnung 6 sind in einem Extrusionskopf 18 integriert.

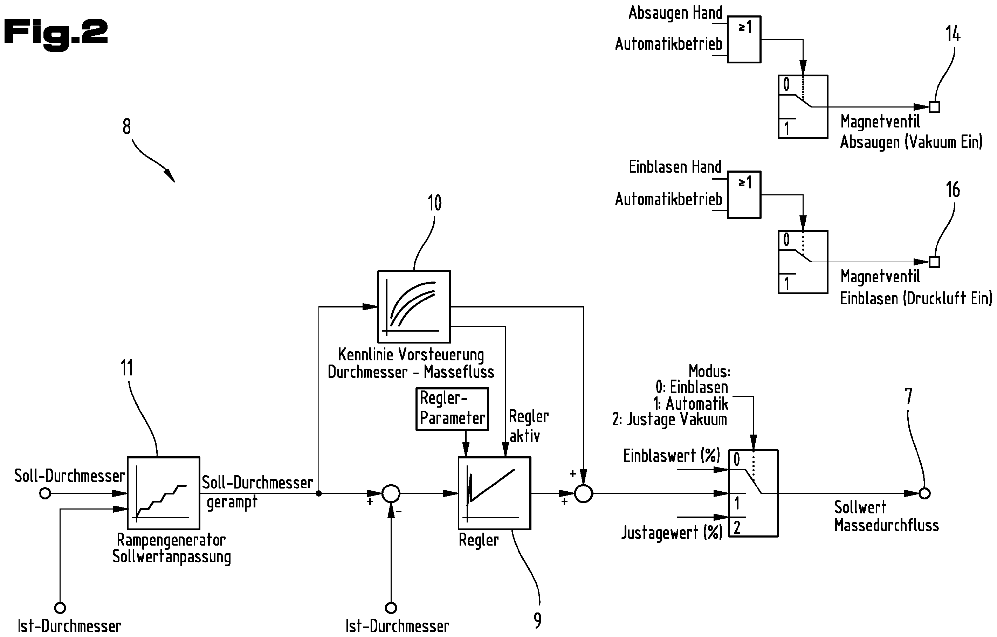

In der dargestellten bevorzugten Ausführungsform weist die Extrusionsvorrichtung 1 zum Stellen des Proportionalventils 7 einen - einen Regler 9 umfassenden - Regelkreis 8 auf, bei dem ein erfasster IST-Wert einer Eigenschaft des Gegenstandes 2, insbesondere ein Durchmesser des Gegenstandes 2, und/oder ein IST-Wert des Stützgasstromes auf die Stellgröße des Proportionalventils 7 zurückwirkt (siehe auch Fig. 2).

Wie aus Fig. 2 ersichtlich kann die Führungsgröße des Regelkreises 8 ein SOLL-Durchmesser des Gegenstandes und/oder ein durch einen Rampengenerator 11 angepasster SOLL-Durchmesser des Gegenstandes 2 sein. 6. Im Falle eines dem Regler 9 vorgeschalteten Rampengenerators 11 zur Sollwertanpassung können der vorgegebene SOLL-Durchmesser und der IST-Durchmesser des Gegenstandes Eingangsgrößen des Rampengenerators 11 sein.

Da das Proportionalventil 7 in zumindest einem Arbeitsbereich eine nichtlineare Gasstromkennlinie aufweist, weist der Regelkreis 8 eine - dem Regler 9 überlagerte - Vorsteuerung 10 auf. Diese ist derart ausgelegt, um eine nichtlineare Gasstromkennlinie des Proportionalventils 7 - ganz oder teilweise - zu kompensieren. Der Regelkreis 8 ist im Detail in Fig. 2 dargestellt.

Es ist bevorzugt, wenn - wie in Fig. 1 gezeigt - in der Stützgaszufuhr 5 zumindest ein Sensor 15 zur Erfassung einer Eigenschaft des Stützgasstromes, vorzugsweise des Volumenstromes und/oder des Massenstromes und/oder des Gasdruckes des Stützgases, angeordnet ist. Die erfasste(n) Eigenschaft(en) des Stützgasstromes können als Eingangsgröße(en) für den Regelkreis 8 und/oder die Vorsteuerung 10 dient/-en.

Alternativ oder zusätzlich kann die Extrusionsvorrichtung 1 zumindest einen Sensor 19 (z.B. in Form einer Kamera oder eines Lichtschrankensensors) zur Erfassung einer Eigenschaft des Gegenstandes 2, insbesondere des Durchmessers des Gegenstandes 2, aufweisen. Die erfasste(n) Eigenschaft(en) des Gegenstandes 2 können dann als Eingangsgröße(en) für den Regelkreis 8 und/oder die Vorsteuerung 10 dient/-en.

Wie in Fig. 1 gezeigt kann aus der Stützgaszufuhr eine Abführleitung 12 zum Abführen von Stützgas abzweigen. In der dargestellten Ausführungsform ist die Abführleitung 12 an einen Unterdruckerzeuger 13, insbesondere eine Vakuumpumpe, angeschlossen. Der Unterdruckerzeuger 13 kann im Übrigen von dem Regler 9 des Regelkreises 8 angesteuert werden oder von einer gesonderten Regeleinrichtung.

Die Abführleitung 12 kann über das Proportionalventil 7 mit der Stützgaszufuhr 5 verbunden sein, wobei die Abführleitung 12 in einem ersten Stellbereich des Proportionalventils 7 von der Stützgaszufuhr abgekoppelt ist und in einem zweiten Stellbereich des Proportionalventils 7 an die Stützgaszufuhr 5 angekoppelt ist. Bei zu hohem Druck im Inneren des Extrudats kann die Abführleitung durch Stellen des Ventils aktiviert werden, wodurch eine unmittelbare Druckminderung bewirkt wird.

Der Regelkreis 8 kann somit derart ausgelegt sein, dass in einem Bereich des Regelbereiches, vorzugsweise beginnend im Bereich der Mitte des Regelbereiches, durch Ankoppeln der Abfuhrleitung 12 an die Stützgaszufuhr 5 Stützgas abgeführt wird, wodurch vorzugsweise der Druck im Inneren des entstehenden Gegenstandes 2 abgebaut und/oder auf einem Sollwert gehalten wird.

In einer besonderen Ausführungsform des Proportionalventils sind in zumindest einer Stellung, vorzugsweise in einem Stellbereich, des Proportionalventils 7 sowohl ein zwischen dem Proportionalventil 7 und der Gasdruckquelle 17 verlaufender Abschnitt der Stützgaszufuhr 5 als auch die Abführleitung 12 strömungstechnisch an die Einblasöffnung 6 gekoppelt. Dadurch lässt sich ein besonders großer und fein regelbarer Arbeitsbereich hinsichtlich des Stützgases erreichen.

In der Abfuhrleitung 12 kann zusätzlich zumindest ein - vorzugsweise händisch und/oder durch einen gesonderten Regler ansteuerbares - Ventil 14 zur Steuerung der Stützgasabfuhr geschalten sein. Ebenso kann die Stützgaszufuhr 5 zusätzlich zu dem Proportionalventil 7 zumindest ein weiteres - vorzugsweise händisch und/oder durch einen gesonderten Regler ansteuerbares - Ventil 16 zur Steuerung des Stützgases aufweisen. In der dargestellten Ausführungsform ist dieses weitere Ventil 16 zwischen dem Proportionalventil 7 und der Gasdruckquelle 17 geschaltet.

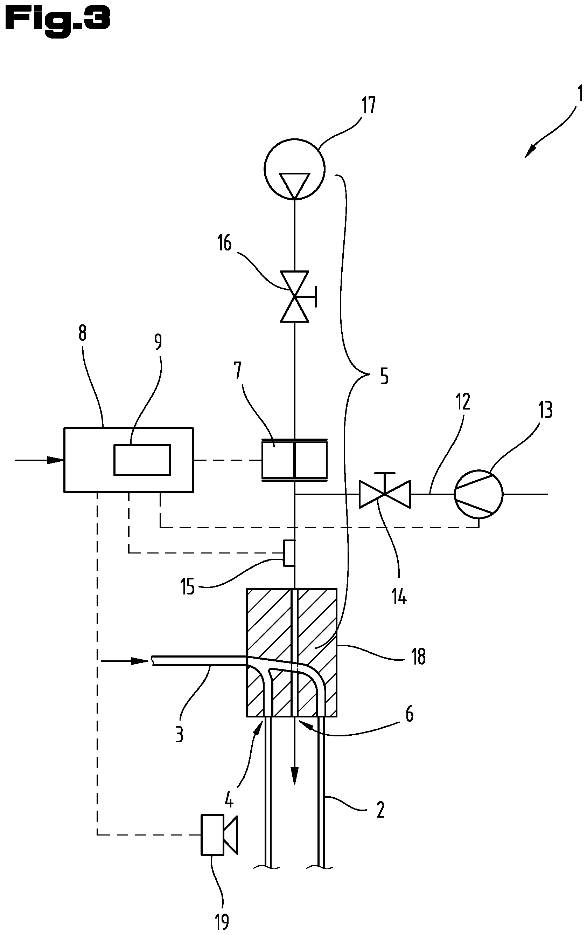

In einer weiteren, in Fig. 3 gezeigten Ausführungsform mündet die Abführleitung 12 in einem Bereich zwischen dem Proportionalventil 7 und der Einblasöffnung 4 in die Stützgaszufuhr 5. In diesem Fall erfolgt das Zuschalten an den Unterdruckerzeuger 13 mittels des Ventils 14 zur Steuerung der Stützgasabfuhr.

Bei dem Verfahren zur Herstellung eines einen Hohlraum aufweisenden Gegenstandes 2 mittels einer Extrusionsvorrichtung 1, wird nun über eine Materialzufuhr 3 Material zu einer Extrusionsdüse 4 zugeführt. Die hierfür vorgesehenen Mittel (Materialreservoir, Beheizung, Fördereinrichtung, etc.) sind aus dem Stand der Technik bestens bekannt. Mittels der Stützgaszufuhr 5 wird nun Stützgas über eine Einblasöffnung 6 in das Innere des entstehenden Gegenstandes 2 eingebracht. Zur Regelung der Stützgases wird - wie bereits ausführlich dargelegt - ein durch einen Regler regelbares Proportionalventil 7 verwendet.

Fig. 2 zeigt im Detail wie ein solcher Regelkreis ausgebildet sein kann. Das Stellen des Proportionalventils 7 erfolgt demnach durch einen - einen Regler 9 umfassenden - Regelkreis 8, bei dem ein erfasster IST-Wert einer Eigenschaft des Gegenstandes 2, insbesondere ein IST-Durchmesser des Gegenstandes 2 zurückwirkt. Zusätzlich oder alternativ kann auch ein IST-Wert des Stützgasstromes auf die Stellgröße des Proportionalventils 7 zurückwirken. Der Regelkreis 8 aus Fig. 2 weist eine - dem Regler 9 überlagerte - Vorsteuerung 10 auf, mittels der eine nichtlineare Gasstromkennlinie des Proportionalventils 7 - zumindest teilweise, vorzugsweise zur Gänze - kompensiert wird. Durch derartiges Regeln der Stellgröße für das Proportionalventil 7 kann nun eine hohe und nachhaltige Stabilität des Stützgasstromes erreicht werden.

In der dargestellten Ausführungsform kann das Proportionalventil 7 im Modus "Automatik" von dem Regelkreis 8 angesteuert werden. Es kann aber auch in einem Modus "Einblasen" oder in einem Modus "Justage Vakuum" betrieben werden. In den letzteren zwei Modi kann ein gesonderter Regler (z.B. per "Hand") die Betätigung des Proportionalventils übernehmen. Somit sind sämtliche Optionen für einen zuverlässigen Betrieb der Stützgaszufuhr 5 gegeben.

Die in Fig. 2 angedeuteten Ventile 14 (zum Absaugen) und 16 (zum Einblasen) können ebenfalls durch den Regelkreis 8 oder einen gesonderten Regler angesteuert werden (siehe "Automatikbetrieb") oder in einem anderen Betriebsmodus per "Hand" eingestellt werden. Die Ventile 14 und 16 (siehe auch Fig. 1) können z.B. Magnetventile sein.

### Bezugszeichenaufstellung

- 1: Extrusionsvorrichtung
- 2: Gegenstand
- 3: Materialzufuhr
- 4: Extrusionsdüse
- 5: Stützgaszufuhr
- 6: Einblasöffnung
- 7: Proportionalventil
- 8: Regelkreis
- 9: Regler
- 10: Vorsteuerung
- 11: Rampengenerator
- 12: Abführleitung
- 13: Unterdruckerzeuger
- 14: Ventil
- 15: Sensor
- 16: Ventil
- 17: Gasdruckquelle
- 18: Extrusionskopf
- 19: Sensor

## Patentansprüche

1. Extrusionsvorrichtung (1), insbesondere Blasfolienextrusionsvorrichtung, zur Herstellung eines einen Hohlraum aufweisenden Gegenstandes (2), insbesondere eines Schlauches, einer Blasfolie oder eines Behälters, umfassend
- eine Materialzufuhr (3), die in einer Extrusionsdüse (4) mündet, und
- eine in einer Einblasöffnung (6) mündende Stützgaszufuhr (5) zum Einbringen von Stützgas in das Innere des entstehenden Gegenstandes (2),
wobei die Stützgaszufuhr (5) zumindest ein Ventil zur Regelung des Stützgases aufweist, **dadurch gekennzeichnet, dass** zumindest ein Ventil zur Regelung der Stützgases ein durch einen Regler (9) regelbares Proportionalventil (7) ist, dass das Proportionalventil (7) in zumindest einem Arbeitsbereich eine nichtlineare Gasstromkennlinie aufweist und dass der Regelkreis (8) eine - dem Regler (9) überlagerte - Vorsteuerung (10) aufweist, wobei die Vorsteuerung (10) ausgelegt ist, eine nichtlineare Gasstromkennlinie des Proportionalventils (7) zu kompensieren.

2. Extrusionsvorrichtung nach Anspruch 1, **dadurch gekennzeichnet, dass** die
Extrusionsvorrichtung (1) zum Stellen des Proportionalventils (7) einen - einen Regler (9) umfassenden - Regelkreis (8) aufweist, bei dem ein erfasster IST-Wert einer Eigenschaft des Gegenstandes (2), insbesondere ein Durchmesser des Gegenstandes (2), und/oder ein IST-Wert des Stützgasstromes auf die Stellgröße des Proportionalventils (7) zurückwirkt.

3. Extrusionsvorrichtung nach Anspruch 2, **dadurch gekennzeichnet, dass** die
Führungsgröße des Regelkreises (8) ein SOLL-Durchmesser des Gegenstandes und/oder ein durch einen Rampengenerator (11) angepasster SOLL-Durchmesser des Gegenstandes ist.

4. Extrusionsvorrichtung nach einem der Ansprüche 2 oder 3, **dadurch gekennzeichnet, dass** dem Regler (9) ein Rampengenerator (11) zur Sollwertanpassung vorgeschaltet ist,
wobei vorzugsweise der SOLL-Durchmesser und der IST-Durchmesser des Gegenstandes Eingangsgrößen des Rampengenerators (11) sind.

5. Extrusionsvorrichtung nach einem der vorhergehenden Ansprüche, **dadurch**
**gekennzeichnet, dass** in der Stützgaszufuhr (5) zumindest ein Sensor (15) zur Erfassung einer Eigenschaft des Stützgasstromes, vorzugsweise des Volumenstromes und/oder des
Massenstromes und/oder des Gasdruckes des Stützgases, angeordnet ist, wobei vorzugsweise die erfasste(n) Eigenschaft(en) des Stützgasstromes als Eingangsgröße(en) für den Regelkreis (8) und/oder die Vorsteuerung (10) dient/-en,
und/oder dass die Extrusionsvorrichtung (1) zumindest einen Sensor (19) zur Erfassung einer Eigenschaft des Gegenstandes (2), insbesondere des Durchmessers des Gegenstandes (2), aufweist, wobei vorzugsweise die erfasste(n) Eigenschaft(en) des Gegenstandes (2) als Eingangsgröße(en) für den Regelkreis (8) und/oder die Vorsteuerung (10) dient/-en.

6. Extrusionsvorrichtung nach einem der vorhergehenden Ansprüche, **dadurch**
**gekennzeichnet, dass** aus der Stützgaszufuhr eine Abführleitung (12) zum Abführen von Stützgas abzweigt, wobei vorzugweise die Abführleitung (12) an einen Unterdruckerzeuger (13), insbesondere eine Vakuumpumpe, angeschlossen ist.

7. Extrusionsvorrichtung nach einem der vorhergehenden Ansprüche, **dadurch**
**gekennzeichnet, dass** die Abführleitung (12) über das Proportionalventil (7) mit der Stützgaszufuhr (5) verbunden ist, wobei die Abführleitung (12) in einem ersten Stellbereich des Proportionalventils (7) von der Stützgaszufuhr abgekoppelt ist und in einem zweiten Stellbereich des Proportionalventils (7) an die Stützgaszufuhr (5) angekoppelt ist,
und/oder dass die Abführleitung (12) in einem Bereich zwischen dem Proportionalventil (7) und der Einblasöffnung (4) in die Stützgaszufuhr (5) mündet.

8. Extrusionsvorrichtung nach einem der vorhergehenden Ansprüche, **dadurch**
**gekennzeichnet, dass** der Regelkreis (8) derart ausgelegt ist, dass in einem Bereich des Regelbereiches, vorzugsweise beginnend im Bereich der Mitte des Regelbereiches, durch Ankoppeln der Abfuhrleitung (12) an die Stützgaszufuhr (5) Stützgas abgeführt wird,
wodurch vorzugsweise der Druck im Inneren des entstehenden Gegenstandes (2) abgebaut und/oder auf einem Sollwert gehalten wird.

9. Extrusionsvorrichtung nach einem der vorhergehenden Ansprüche, **dadurch**
**gekennzeichnet, dass** die Abführleitung (12) an einen Unterdruckerzeuger (13), insbesondere eine Vakuumpumpe, angeschlossen ist, wobei vorzugsweise der Unterdruckerzeuger (13) von dem Regler (9) des Regelkreises (8) angesteuert wird,
und/oder dass die Stützgaszufuhr (5) eine Gasdruckquelle (17) aufweist.

10. Extrusionsvorrichtung nach einem der vorhergehenden Ansprüche, **dadurch**
**gekennzeichnet, dass** in zumindest einer Stellung, vorzugsweise in einem Stellbereich, des Proportionalventils (7) sowohl ein zwischen dem Proportionalventil (7) und der Gasdruckquelle (17) verlaufender Abschnitt der Stützgaszufuhr (5) als auch die Abführleitung (12) strömungstechnisch an die Einblasöffnung (6) gekoppelt sind,
und/oder dass in zumindest einem Betriebszustand der Extrusionsvorrichtung (1) sowohl die Gasdruckquelle (17) über das zumindest teilweise geöffnete Proportionalventil (7) als auch der Unterdruckerzeuger (13) - vorzugsweise über zumindest ein zumindest teilweise geöffnetes Ventil (7, 14) - strömungstechnisch an die Einblasöffnung (4) gekoppelt sind,
sodass gleichzeitig Stützgas über die Stützgaszufuhr zugeführt und über die Abführleitung (12) abgeführt werden kann, wobei vorzugsweise das Verhältnis zwischen dem zugeführten Stützgas und dem abgeführten Stützgas mittels des Proportionalventils (7) und/oder einem in der Abführleitung geschalteten Ventil (14) und/oder einem regelbaren Unterdruckerzeuger (13) regelbar ist.

11. Extrusionsvorrichtung nach einem der Ansprüche 6 bis 10, **dadurch gekennzeichnet, dass** in der Abfuhrleitung (12) zumindest ein - vorzugsweise händisch und/oder durch einen gesonderten Regler ansteuerbares - Ventil (14) zur Steuerung der Stützgasabfuhr geschaltet ist.

12. Extrusionsvorrichtung nach einem der vorhergehenden Ansprüche, **dadurch gekennzeichnet, dass** die Stützgaszufuhr (5) zusätzlich zu dem Proportionalventil (7) zumindest ein weiteres - vorzugsweise händisch und/oder durch einen gesonderten Regler ansteuerbares - Ventil (16) zur Steuerung des Stützgases aufweist, wobei vorzugsweise das weitere Ventil (16) zwischen dem Proportionalventil (7) und der Gasdruckquelle (17) geschaltet ist.

13. Extrusionsvorrichtung nach einem der vorhergehenden Ansprüche, **dadurch gekennzeichnet, dass** die Extrusionsdüse (4) und die Einblasöffnung (6) in einem Extrusionskopf (18) integriert sind.

14. Verfahren zur Herstellung eines einen Hohlraum aufweisenden Gegenstandes (2), insbesondere eines Schlauches, einer Blasfolie oder eines Behälters, mittels einer Extrusionsvorrichtung (1), insbesondere Blasfolienextrusionsvorrichtung, wobei über eine Materialzufuhr (3) Material zu einer Extrusionsdüse (4) zugeführt wird und mittels eine Stützgaszufuhr (5) Stützgas über eine Einblasöffnung (6) in das Innere des entstehenden Gegenstandes (2) eingebracht wird,
wobei die Stützgaszufuhr (5) zumindest ein Ventil zur Regelung der Stützgases aufweist, **dadurch gekennzeichnet, dass** zumindest ein Ventil zur Regelung der Stützgaszufuhr ein durch einen Regler regelbares Proportionalventil (7) ist, dass das Proportionalventil (7) in zumindest einem Arbeitsbereich eine nichtlineare Gasstromkennlinie aufweist und dass der Regelkreis (8) eine - dem Regler (9) überlagerte - Vorsteuerung (10) aufweist, wobei mittels der Vorsteuerung (10) eine nichtlineare Gasstromkennlinie des Proportionalventils (7) kompensiert wird.

15. Verfahren nach Anspruch 14, **dadurch gekennzeichnet, dass** das Stellen des Proportionalventils (7) durch einen - einen Regler (9) umfassenden - Regelkreis (8) erfolgt, bei dem ein erfasster IST-Wert einer Eigenschaft des Gegenstandes (2), insbesondere ein Durchmesser des Gegenstandes (2), und/oder ein IST-Wert des Stützgasstromes auf die Stellgröße des Proportionalventils (7) zurückwirkt.

16. Verfahren nach einem der Ansprüche 14 bis 15, **dadurch gekennzeichnet, dass** eine Abführleitung (12) zum Abführen von Stützgas über das Proportionalventil (7) mit der Stützgaszufuhr (5) verbunden ist, wobei zum Regeln des Stützgasstromes das Proportionalventil (7) zwischen einem ersten Stellbereich, in dem die Abführleitung (12) von der Stützgaszufuhr (5) abgekoppelt ist, und einem zweiten Stellbereich, in dem die Abführleitung (12) an die Stützgaszufuhr (5) angekoppelt ist, geregelt wird,
und/oder dass in einem Bereich des Regelbereiches, vorzugsweise beginnend im Bereich der Mitte des Regelbereiches, durch Ankoppeln der Abfuhrleitung (12) an die Stützgaszufuhr (5) Stützgas abgeführt wird, wodurch vorzugsweise der Druck im Inneren des entstehenden Gegenstandes (2) abgebaut und/oder auf einem Sollwert gehalten wird und/oder dass in zumindest einem Betriebszustand der Extrusionsvorrichtung (1) sowohl die Gasdruckquelle (17) über das zumindest teilweise geöffnete Proportionalventil (7) als auch der Unterdruckerzeuger (13) - vorzugsweise über zumindest ein zumindest teilweise geöffnetes Ventil (7, 14) - strömungstechnisch an die Einblasöffnung (4) gekoppelt sind, sodass gleichzeitig Stützgas über die Stützgaszufuhr zugeführt und über die Abführleitung (12) abgeführt wird, wobei vorzugsweise das Verhältnis zwischen dem zugeführten Stützgas und dem abgeführten Stützgas mittels des Proportionalventils (7) und/oder einem in der Abführleitung geschalteten Ventil (14) und/oder einem regelbaren Unterdruckerzeuger (13) geregelt wird.

17. Verfahren nach einem der Ansprüche 14 bis 16, **dadurch gekennzeichnet, dass** die Extrusionsvorrichtung (1) nach einem der Ansprüche 1 bis 13 ausgebildet ist.

## Claims

1. An extrusion device (1), in particular a blown film extrusion device, for producing an object (2), in particular a tube, a blown film or a container, having a cavity, comprising
- a material feed (3) which opens into an extrusion die (4), and
- a supporting gas supply (5), which opens into an injection opening (6), for introducing supporting gas into the interior of the object (2) being formed,
wherein the supporting gas supply (5) has at least one valve for controlling the supporting gas,
**characterized in that** at least one valve for controlling the supporting gas is a proportional valve (7) which can be controlled by a controller (9), that the proportional valve (7) has a non-linear gas flow characteristic in at least one operating range and that the control circuit (8) has a pilot control (10) - which is superimposed on the controller (9) -, wherein the pilot control (10) is configured to compensate for a non-linear gas flow characteristic of the proportional valve (7).

2. The extrusion device according to claim 1, **characterized in that** the extrusion device (1) has a control circuit (8) - comprising a controller (9) - for adjusting the proportional valve (7), in which control circuit (8) a detected ACTUAL value of a property of the object (2), in particular a diameter of the object (2), and/or an ACTUAL value of the supporting gas flow acts back on the manipulated variable of the proportional valve (7).

3. The extrusion device according to claim 2, **characterized in that** the reference variable of the control circuit (8) is a TARGET diameter of the object and/or a TARGET diameter of the object adapted by a ramp generator (11).

4. The extrusion device according to one of claims 2 or 3, **characterized in that** a ramp generator (11) is connected upstream of the controller (9) for target value adaption, wherein preferably the TARGET diameter and the ACTUAL diameter of the object are input variables of the ramp generator (11).

5. The extrusion device according to one of the preceding claims, **characterized in that** at least one sensor (15) is arranged in the supporting gas supply (5) for detecting a property of the supporting gas flow, preferably the volume flow rate and/or the mass flow rate and/or the gas pressure of the supporting gas, wherein preferably the detected property or properties of the supporting gas flow serve(s) as input variable or variables for the control circuit (8) and/or the pilot control (10),
and/or that the extrusion device (1) has at least one sensor (19) for detecting a property of the object (2), in particular the diameter of the object (2), wherein preferably the detected property or properties of the object (2) serve(s) as input variable or variables for the control circuit (8) and/or the pilot control (10).

6. The extrusion device according to one of the preceding claims, **characterized in that** a discharge line (12) for discharging supporting gas branches off from the supporting gas supply, wherein preferably the discharge line (12) is connected to a vacuum generator (13), in particular a vacuum pump.

7. The extrusion device according to one of the preceding claims, **characterized in that** the discharge line (12) is connected to the supporting gas supply (5) via the proportional valve (7), wherein the discharge line (12) is decoupled from the supporting gas supply in a first adjustment range of the proportional valve (7) and is coupled to the supporting gas supply (5) in a second adjustment range of the proportional valve (7),
and/or that the discharge line (12) opens into the supporting gas supply (5) in a region between the proportional valve (7) and the injection opening (4).

8. The extrusion device according to one of the preceding claims, **characterized in that** the control circuit (8) is configured such that supporting gas is discharged in a region of the control range, preferably starting in the region of the center of the control range, by coupling the discharge line (12) to the supporting gas supply (5), whereby the pressure inside the object (2) being formed is preferably reduced and/or maintained at a target value.

9. The extrusion device according to one of the preceding claims, **characterized in that** the discharge line (12) is connected to a vacuum generator (13), in particular a vacuum pump, wherein preferably the vacuum generator (13) is controlled by the controller (9) of the control circuit (8),
and/or that the supporting gas supply (5) has a gas pressure source (17).

10. The extrusion device according to one of the preceding claims, **characterized in that** in at least one position, preferably in an adjustment range, of the proportional valve (7),
both a section of the supporting gas supply (5) extending between the proportional valve (7) and the gas pressure source (17) and the discharge line (12) are flow-coupled to the injection opening (6),
and/or that, in at least one operating state of the extrusion device (1), both the gas pressure source (17) via the at least partially open proportional valve (7) and the vacuum generator (13) - preferably via at least one at least partially open valve (7, 14) - are flow-coupled to the injection opening (4), so that supporting gas can be simultaneously supplied via the supporting gas supply and discharged via the discharge line (12), wherein preferably the ratio between the supplied supporting gas and the discharged supporting gas is controllable by means of the proportional valve (7) and/or a valve (14) connected in the discharge line and/or a controllable vacuum generator (13).

11. The extrusion device according to one of claims 6 to 10, **characterized in that** at least one valve (14) - which can preferably be controlled manually and/or by a separate controller - is connected in the discharge line (12) to control the support gas discharge.

12. The extrusion device according to one of the preceding claims, **characterized in that** the supporting gas supply (5) has, in addition to the proportional valve (7), at least one further valve (16) - which can preferably be controlled manually and/or by a separate controller - for controlling the supporting gas, wherein preferably the further valve (16) is connected between the proportional valve (7) and the gas pressure source (17).

13. The extrusion device according to one of the preceding claims, **characterized in that** the extrusion nozzle (4) and the injection opening (6) are integrated in an extrusion head (18).

14. A method for producing an object (2), in particular a tube, a blown film or a container, having a cavity, by means of an extrusion device (1), in particular a blown film extrusion device, wherein material is fed to an extrusion nozzle (4) via a material feed (3) and supporting gas is introduced into the interior of the object (2) being formed via an injection opening (6) by means of a supporting gas supply (5),
wherein the supporting gas supply (5) has at least one valve for controlling the supporting gas,
**characterized in that** at least one valve for controlling the supporting gas supply is a proportional valve (7) which can be controlled by a controller, **in that** the proportional valve (7) has a non-linear gas flow characteristic in at least one operating range, and **in that** the control circuit (8) has a pilot control (10) which is superimposed on the controller (9), a non-linear gas flow characteristic of the proportional valve (7) being compensated for by means of the pilot control (10).

15. The method according to claim 14, **characterized in that** the proportional valve (7) is adjusted by a control circuit (8) - comprising a controller (9) - in which a detected ACTUAL value of a property of the object (2), in particular a diameter of the object (2), and/or an ACTUAL value of the supporting gas flow acts back on the adjusted variable of the proportional valve (7).

16. The method according to one of claims 14 to 15, **characterized in that** a discharge line (12) for discharging supporting gas is connected to the supporting gas supply (5) via the proportional valve (7), wherein the proportional valve (7) is controlled between a first adjustment range, in which the discharge line (12) is decoupled from the supporting gas supply (5), and a second adjustment range, in which the discharge line (12) is coupled to the supporting gas supply (5), in order to control the supporting gas flow,
and/or that in a region of the control range, preferably starting in the region of the center of the control range, by coupling the discharge line (12) to the supporting gas supply (5), whereby the pressure inside the object (2) being formed is preferably reduced and/or maintained at a target value,
and/or that, in at least one operating state of the extrusion device (1), both the gas pressure source (17) via the at least partially open proportional valve (7) and the vacuum generator (13) - preferably via at least one at least partially open valve (7, 14) - are flow-coupled to the injection opening (4), so that supporting gas is simultaneously supplied via the supporting gas supply and discharged via the discharge line (12),
wherein preferably the ratio between the supplied supporting gas and the discharged supporting gas is controlled by means of the proportional valve (7) and/or a valve (14) connected in the discharge line and/or a controllable vacuum generator (13).

17. The method according to one of claims 14 to 16, **characterized in that** the extrusion device (1) is configured according to one of claims 1 to 13.

## Revendications

1. Dispositif d'extrusion (1), plus particulièrement dispositif d'extrusion de film soufflé, pour la fabrication d'un objet (2) présentant une cavité, plus particulièrement d'une gaine, d'un film soufflé ou d'un récipient, comprenant
- une alimentation de matériau (3) qui débouche dans une buse d'extrusion (4) et
- une alimentation de gaz de support (5), débouchant dans une ouverture de soufflage (6), pour l'introduction d'un gaz de support à l'intérieur de l'objet (2) qui en résulte,
dans lequel l'alimentation en gaz de support (5) comprend au moins une soupape pour la régulation du gaz de support, **caractérisé en ce qu'**au moins une soupape pour la régulation du gaz de support est une soupape proportionnelle (7) pouvant être régulée par un régulateur (9), **en ce que** la soupape proportionnelle (7) présente, dans au moins une zone de travail, une courbe caractéristique de débit de gaz non linéaire et **en ce que** le circuit de régulation (8) comprend une commande pilote (10) - superposée au régulateur (9), dans lequel la commande pilote (10) est conçue pour compenser une courbe caractéristique de débit de gaz non linéaire de la soupape proportionnelle (7).

2. Dispositif d'extrusion selon la revendication 1, **caractérisé en ce que** le dispositif d'extrusion (1) comprend, pour le réglage de la soupape proportionnelle (7), un circuit de régulation (8) - comprenant un régulateur (9), dans lequel une valeur effective d'une propriété de l'objet (2), plus particulièrement un diamètre de l'objet (2) et/ou une valeur effective du débit de gaz de support agit en retour sur la grandeur de réglage de la soupape proportionnelle (7).

3. Dispositif d'extrusion selon la revendication 2, **caractérisé en ce que** la grandeur de guidage du circuit de régulation (8) est un diamètre de consigne de l'objet et/ou un diamètre de consigne, adapté à l'aide d'un générateur de rampe (11), de l'objet.

4. Dispositif d'extrusion selon l'une des revendications 2 ou 3, **caractérisé en ce que**, en amont du régulateur (9), est branché un générateur de rampe (11) pour l'adaptation de la valeur de consigne, dans lequel, de préférence, le diamètre de consigne et le diamètre effectif de l'objet sont des grandeurs d'entrée du générateur de rampe (11).

5. Dispositif d'extrusion selon l'une des revendications précédentes, **caractérisé en ce que**, dans l'alimentation en gaz de support (5), est disposé au moins un capteur (15) pour la mesure d'une propriété du flux de gaz de support, de préférence du débit volumique et/ou du débit massique et/ou de la pression de gaz du gaz de support, dans lequel, de préférence, la ou les propriétés mesurées du flux de gaz de support servent de grandeurs d'entrée pour le circuit de régulation (8) et/ou la commande pilote (10),
et/ou **en ce que** le dispositif d'extrusion (1) comprend au moins un capteur (19) pour la mesure d'une propriété de l'objet (2), plus particulièrement du diamètre de l'objet (2), dans lequel, de préférence, la ou les propriétés mesurées de l'objet (2) servent de grandeurs d'entrée pour le circuit de régulation (8) et/ou la commande pilote (10).

6. Dispositif d'extrusion selon l'une des revendications précédentes, **caractérisé en ce que**, à partir de l'alimentation en gaz de support, bifurque une conduite d'évacuation (12) pour l'évacuation du gaz de support, dans lequel, de préférence, la conduite d'évacuation (12) est raccordée à un générateur de dépression (13), plus particulièrement une pompe à vide.

7. Dispositif d'extrusion selon l'une des revendications précédentes, **caractérisé en ce que** la conduite d'évacuation (12) est reliée, par l'intermédiaire de la soupape proportionnelle (7), avec l'alimentation en gaz de support (5), dans lequel la conduite d'évacuation (12) est découplée, dans une première zone de réglage de la soupape proportionnelle (7), de l'alimentation en gaz de support et est couplée, dans une deuxième zone de réglage de la soupape proportionnelle (7), à l'alimentation de gaz de support (5),
et/ou **en ce que** la conduite d'évacuation (12) débouche dans l'alimentation en gaz de support (5) dans une zone située entre la soupape proportionnelle (7) et l'ouverture de soufflage (6).

8. Dispositif d'extrusion selon l'une des revendications précédentes, **caractérisé en ce que** le circuit de régulation (8) est conçu de sorte que, dans une partie de la zone de régulation, de préférence, à partir du milieu de la zone de régulation, le gaz de support est évacué, par le couplage de la conduite d'évacuation (12), vers l'alimentation en gaz de support (5), ce qui permet de diminuer, de préférence, la pression à l'intérieur de l'objet (2) qui en résulte et/ou de la maintenir à une valeur de consigne.

9. Dispositif d'extrusion selon l'une des revendications précédentes, **caractérisé en ce que** la conduite d'évacuation (12) est raccordée à un générateur de dépression (13), plus particulièrement une pompe à vide, dans lequel, de préférence, le générateur de dépression (13) est contrôlé par le régulateur (9) du circuit de régulation (8),
et/ou **en ce que** l'alimentation en gaz de support (5) comprend une source de pression de gaz (17).

10. Dispositif d'extrusion selon l'une des revendications précédentes, **caractérisé en ce que**, dans au moins une position, de préférence dans une zone de réglage, de la soupape proportionnelle (7), aussi bien une portion, s'étendant entre la soupape proportionnelle (7) et la source de pression de gaz (17), de l'alimentation en gaz de support (5), que la conduite d'évacuation (12) sont couplées en écoulement à l'ouverture de soufflage (6), et/ou **en ce que**, dans au moins un état de fonctionnement du dispositif d'extrusion (1), aussi bien la source de pression de gaz (17), par l'intermédiaire de la soupape proportionnelle (7) au moins partiellement ouverte, que le générateur de dépression (13) - de préférence par l'intermédiaire d'au moins une soupape (7, 14) au moins partiellement ouverte - sont couplées en écoulement à l'ouverture de soufflage (4), de sorte que, simultanément, le gaz de support est introduit par l'intermédiaire de l'alimentation en gaz de support et peut être évacué par l'intermédiaire de la conduite d'évacuation (12), dans lequel, de préférence, le rapport entre le gaz de support introduit et je gaz de support évacué peut être régulé au moyen de la soupape proportionnelle (7) et/ou d'une soupape (14) disposée dans la conduite d'évacuation et/ou d'un générateur de dépression réglable (13).

11. Dispositif d'extrusion selon l'une des revendications 6 à 10, **caractérisé en ce que**, dans la conduite d'évacuation (12), est branchée au moins une soupape (14) - contrôlable de préférence manuellement et/ou à l'aide d'un régulateur séparé - pour le contrôle de l'évacuation du gaz de support.

12. Dispositif d'extrusion selon l'une des revendications précédentes, **caractérisé en ce que** l'alimentation en gaz de support (5) comprend, en plus de la soupape proportionnelle (7), au moins une autre soupape (16) - contrôlable de préférence manuellement et/ou à l'aide d'un régulateur séparé - pour le contrôle du gaz de support, dans lequel, de préférence, l'autre soupape (16) est branchée entre la soupape proportionnelle (7) et la source de pression de gaz (17).

13. Dispositif d'extrusion selon l'une des revendications précédentes, **caractérisé en ce que** la buse d'extrusion (4) et l'ouverture de soufflage (6) sont intégrées dans une tête d'extrusion (18).

14. Procédé de fabrication d'un objet (2) présentant une cavité, plus particulièrement d'une gaine, d'un film soufflé ou d'un récipient, au moyen d'un dispositif d'extrusion (1), plus particulièrement d'un dispositif d'extrusion de film soufflé, dans lequel, par l'intermédiaire d'une alimentation en matériau (3), un matériau est amené vers une buse d'extrusion (4) et, au moyen d'une alimentation de gaz de support (5), un gaz de support est introduit, par l'intermédiaire d'une ouverture de soufflage (6), à l'intérieur de l'objet (2) qui en résulte,
dans lequel l'alimentation en gaz de support (5) comprend au moins une soupape pour la régulation du gaz de support, **caractérisé en ce qu'**au moins une soupape pour la régulation de l'alimentation en gaz de support est une soupape proportionnelle (7) pouvant être régulée à l'aide d'un régulateur, **en ce que** la soupape proportionnelle (7) présente, dans au moins une zone de travail, une courbe caractéristique de débit de gaz non linéaire et **en ce que** le circuit de régulation (8) comprend une commande pilote (10), superposée au régulateur (9), dans lequel, au moyen de la commande pilote (10), une courbe caractéristique non linéaire de la soupape proportionnelle (7) est compensée.

15. Procédé selon la revendication 14, **caractérisé en ce que** le réglage de la soupape proportionnelle (7) est effectué à l'aide d'un circuit de régulation (8) comprenant un régulateur (9), dans lequel une valeur effective d'une propriété de l'objet (2), plus particulièrement un diamètre de l'objet (2) et/ou une valeur effective du flux de gaz de support agit en retour sur la grandeur de réglage de la soupape proportionnelle (7).

16. Procédé selon l'une des revendications 14 à 15, **caractérisé en ce qu'**une conduite d'évacuation (12), pour l'évacuation du gaz de support est reliée, par l'intermédiaire de la soupape proportionnelle (7), à l'alimentation en gaz de support (5), dans lequel, pour la régulation du débit de gaz de support, la soupape proportionnelle (7) est régulée entre une zone de réglage, dans laquelle la conduite d'évacuation (12) est découplée de l'alimentation en gaz de support (5), et une deuxième zone de réglage, dans laquelle la conduite d'évacuation (12) est couplée à l'alimentation en gaz de support (5), et/ou **en ce que**, dans une partie de la zone de régulation, de préférence à partir du milieu de la zone de régulation, le gaz de support est évacué par le couplage de la conduite d'évacuation (12) à l'alimentation en gaz de support (5), ce qui permet, de préférence, de diminuer la pression à l'intérieur de l'objet (2) qui en résulte et/ou de la maintenir à une valeur de consigne,
**en ce que**, dans au moins un état de fonctionnement du dispositif d'extrusion (1), aussi bien la source de pression de gaz (17), par l'intermédiaire de la soupape proportionnelle (7) au moins partiellement ouverte (7), que le générateur de dépression (13) - de préférence par l'intermédiaire d'au moins une soupape (7, 14) au moins partiellement ouverte, sont couplées en écoulement à l'ouverture de soufflage (4), de sorte que, simultanément, le gaz de support est introduit par l'intermédiaire de l'alimentation en gaz de support et est évacué par l'intermédiaire de la conduite d'évacuation (12), dans lequel, de préférence, le rapport entre le gaz de support introduit et le gaz de support évacué est régulé au moyen de la soupape proportionnelle (7) et/ou d'une soupape (14) disposée dans la conduite d'évacuation et/ou d'un générateur de dépression réglable (13).

17. Procédé selon l'une des revendications 14 à 16, **caractérisé en ce que** le dispositif d'extrusion (1) est conçu selon l'une des revendications 1 à 13.
